(19) Europäisches Patentamt
European Patent Office
Office européen des brevets

(11) Veröffentlichungsnummer: **0 140 133**
**B1**

(12) # EUROPÄISCHE PATENTSCHRIFT

(45) Veröffentlichungstag der Patentschrift: **10.08.88**

(51) Int. Cl.⁴: **C 09 K 19/38**

(21) Anmeldenummer: **84111167.7**

(22) Anmeldetag: **19.09.84**

(54) **Flüssig-kristalline Phasen bildende Polymere.**

(30) Priorität: **21.09.83 DE 3334056**

(43) Veröffentlichungstag der Anmeldung: **08.05.85 Patentblatt 85/19**

(45) Bekanntmachung des Hinweises auf die Patenterteilung: **10.08.88 Patentblatt 88/32**

(84) Benannte Vertragsstaaten: **CH DE FR GB IT LI**

(56) Entgegenhaltungen:
**EP-A-0 090 282**

**MOLECULAR CRYSTALS AND LIQUID CRYSTALS, Band 71, Nr. 1/2, 1981, pages 111-135, Gordon and Breach Science Publishers, Inc., New York, US; C. DESTRADE et al.: "Disc-like mesogens: A classification"**

**MOLECULAR CRYSTALS AND LIQUID CRYSTALS, Band 110, Nr. 1/4, 1984, pages 41-58, Gordon and Breach Science Publishers, Inc., New York, US; P. MEURISSE et al.: "Polyesters with mesogenic elements and flexible spacers in the main chain: A further investigation by conformational energy calculations"**

(73) Patentinhaber: **BASF Aktiengesellschaft, Carl-Bosch-Strasse 38, D-6700 Ludwigshafen (DE)**

(72) Erfinder: **Ringsdorf, Helmut, Dr., Kehlweg 41, D-6500 Mainz-Gonsenheim (DE)**
Erfinder: **Kreuder, Willi, Richard-Schirrmann-Strasse 7, D-6500 Mainz (DE)**
Erfinder: **Neumann, Peter, Dr., Franz-Schubert-Strasse 1, D-6908 Wiesloch (DE)**
Erfinder: **Etzbach, Karl-Heinz, Dr., Bensheimer Ring 9 a, D-6710 Frankenthal (DE)**
Erfinder: **Sterzel, Hans-Josef, Dr., Wasgauring 3, D-6701 Dannstadt-Schauernheim (DE)**

**EP 0 140 133 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft flüssig-kristalline Phasen bildende Polymere, deren Herstellung und Verwendung sowie die diesen Polymeren zugrundeliegenden Monomeren.

Bekannt sind niedermolekulare nematische, smektische, cholesterische oder diskotische flüssig-kristalline Systeme, deren charakteristische Phaseneigenschaften zu interessanten und vielseitigen Anwendungsmöglichkeiten in Technik, Elektrooptik und Forschung geführt haben. Ein wesentlicher Nachteil der niedermolekularen Flüssigkristallsysteme besteht darin, daß sie beim Übergang von der flüssig-kristallinen Phase in die feste Phase ihre Strukturparameter vollständig verändern (C. Destrade, N.H. Tinh, H. Gasparoux, J. Malthete, A.M. Levelut; Disc-Like Mesogens: A Classification in: Mol. Cryst. Liq. Cryst. 71, 111 ff. (1981)).

Seit einiger Zeit sind Polymere mit flüssigkristallinen Eigenschaften bekannt, bei denen die starren anisotropen zur Mesophase führenden Molekülabschnitte in der Hauptkette angeordnet sind. Die zur Mesophase führenden Molekülabschnitte sind über flexible Alkylenketten (Spacer) miteinander verbunden. Letztere gestatten die Orientierung und Phasenumwandlung bei Temperaturen im Bereich von -30 bis 200°C, ermöglicht durch entsprechend niedrige Glaserweichungstemperaturen des Polymeren.

Weiterhin sind Polymere bekannt, bei denen die starren anisotropen, zur Mesophase führenden Molekülabschnitte als Seitenketten an eine Polymerkette gebunden sind.

Bisher sind nur Polymere bekannt, die nematische, smektische oder cholesterische Phasen ausbilden (EP-A 7574).

Aufgabe der vorliegenden Erfindung war es Polymere zu entwickeln, die diskotische Phasen bilden.

Es wurde gefunden, daß diskotische Phasen bildende flüssig-kristalline Polymere vorliegen, wenn das Polymere als mesogene Gruppen diskotische Phasen erzeugende Gruppen chemisch gebunden enthält.

Diese neuen Polymeren zeigen neue Eigenschaften bzw. Eigenschaftskombinationen, welche die bekannten flüssig-kristalline Phasen bildenden Polymere nicht aufweisen.

Ein bei anderen flüssig-kristallinen Polymeren nicht bekannter Effekt ist die selbstverstärkende, durch Scherung induzierte Doppelbrechung. Wird zwischen zwei planaren transparenten Platten eine Probe der erfindungsgemäßen Polymeren mit polarisiertem Licht bestrahlt, so erscheint die Probe dunkel. Durch kurzzeitige Scherung wird die Probe lichtdurchlässig. Nach Beendigung der Scherung steigt die Lichtdurchlässigkeit auf das 2- bis 5-fache.

Die neuen Polymere enthalten als mesogene Gruppen chemisch gebundene diskotische Phasen erzeugende Gruppen. Letztere können entweder über Spacer in der Kette gebunden und somit Bestandteil der Polymerhauptkette sein oder über Verbindungsgruppen (Spacer) an die Polymerkette gebunden und damit Bestandteil einer Seitenkette sein.

Als diskotische Phasen bildende Gruppen - im folgenden auch als diskotische Gruppen oder Mesogene bezeichnet - kommen z. B. Verbindungen der folgenden allgemeinen Formeln in Betracht:

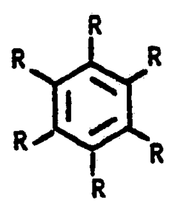
,

(I)

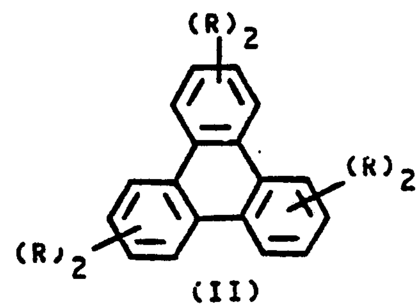

(II)

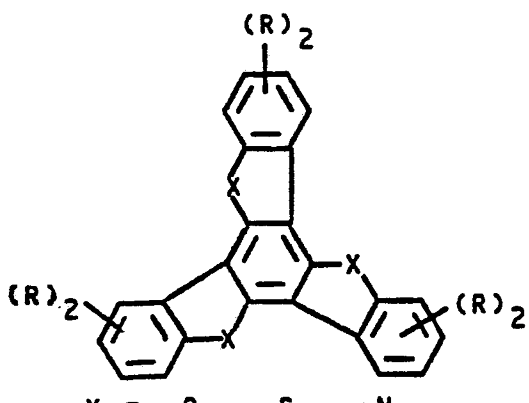

X = -O-, -S-, -N(R)-, >CH$_2$, >C = O

(III)

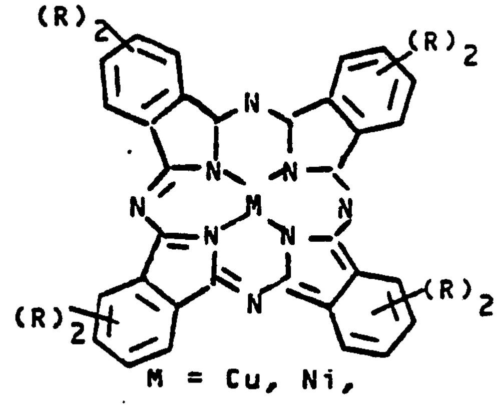

M = Cu, Ni,

(IV)

Die Bindung der diskotischen Gruppen erfolgt je nachdem, ob diese in die Polymerkette als Kettenglieder eingebaut sind, oder als Seitenketten an die Polymerkette gebunden sind, über zwei der Reste R, bzw. einen der Reste R über zwei bzw. einen Spacer.

Dementsprechend stehen in den Formeln (I) bis (IV) ein oder zwei R für einen Rest der allgemeinen Formel

-Y-Z-V-Z- (Va)

und die restlichen R für Reste der allgemeinen Formel

-Y-Z-A (V).

In den Formeln (V) und (Va) stehen

Y für $(-CH_2-)_n$ oder $-\underset{|}{\overset{CH_3}{CH}}-$

n für 0, 1, 2 oder 3,

Z für eine chemische Bindung, $-O-$, $-S-$, $-\overset{R^1}{N}-$, $-SO_2-$, $-\overset{O}{C}-$, $-O-\overset{O}{C}-$, $-\overset{O}{C}-O-$, $-S-\overset{O}{C}-$, $-\overset{O}{C}-S-$, $-\overset{R^1}{N}-\overset{O}{C}-$ oder $-\overset{O}{C}-\overset{R^1}{N}-$,

wobei Z gleich oder verschieden sein können,

$R^1$ für Wasserstoff oder $C_1$- bis $C_4$-Alkyl,

A für $C_4$- bis $C_{25}$-Alkyl, $C_4$- bis $C_{20}$-Alkylphenyl oder $C_4$- bis $C_{20}$-Alkoxyphenyl und

V für einen Spacer, vorzugsweise für ein $C_2$- bis $C_{25}$-Alkylen

und wobei die Alkylkette in A und/oder die Alkylenkette in V gegebenenfalls durch

-0-, -S- und/oder $-\overset{R^1}{N}-$ unterbrochen sind und der Abstand zwischen zwei Heteroatomen mindestens 2 C-Atome beträgt.

A und V sind vorzugsweise sowohl an die Polymerkette bzw. in der Polymerkette wie auch an die diskotischen Gruppen über eine chemische Bindung oder über $-\overset{O}{C}-O-$, $-O-\overset{O}{C}-$, $-\overset{R^1}{N}-\overset{O}{C}-$, $-\overset{O}{C}-\overset{R^1}{N}-$, $-\overset{H}{N}-\overset{O}{C}-O-$, $-\overset{H}{N}-\overset{O}{C}-\overset{R^1}{N}-$, $-O-\overset{O}{C}-\overset{H}{N}-$ oder $-\overset{R^1}{N}-\overset{O}{C}-\overset{H}{N}-$ gebunden.

Als Spacer kommen insbesondere Alkylengruppen mit 2 bis 25 C-Atomen in Betracht, die linear oder verzweigt und deren Kette durch -O-, -S- oder

$-\overset{R^1}{N}-$ unterbrochen sein kann.

Als Spacer sind z. B. im einzelnen zu nennen:

$-(CH_2)_2-$, $-(CH_2)_3-$, $-(CH_2)_4-$, $-(CH_2)_5-$, $-(CH_2)_6-$, $-(CH_2)_8$ $(CH_2)_{10}$,

$-(CH_2)-_{14}-$, $-(CH_2)_{12}-$, $-(CH_2)-_{16}-$, $-(CH_2)-_{18}$, $-(CH_2)-_{20}$, $-(CH_2)-_{21}$, $-(CH_2)-_{22}-$,

$-(CH_2)-_{24}-$, $-(CH_2)-_{25}-$,

$(CH_2)_2-0-(CH_2)_2-$, $-(CH_2)_2-S-(CH_2)_2-$, $-(CH_2)_2-\underset{CH_3}{\underset{|}{N}}-(CH_2)_2-$, $-\underset{CH_3}{\underset{|}{CH}}-(CH_2)-$.

Als Alkylenreste Y sind $-CH_2-$, $-(CH_2)-_2$, $-(CH_2)-_3$ und $-\underset{|}{\overset{CH_3}{CH}}-$ zu nennen.

$R^1$ steht für $C_1$- bis $C_4$-Alkyl wie Methyl oder Ethyl. Vorzugsweise ist $R^1$ Methyl und insbesondere Wasserstoff.

Für A sind z. B. im einzelnen zu nennen:

als $C_4$- bis $C_{25}$-Alkyl: n-Butyl, Pentyl, Hexyl, Heptyl, Octyl, 2-Ethyl-hexyl-, Nonyl, Decyl, Dodecyl, Tetradecyl, Hexadecyl, Octadecyl, Eicosyl; Heneicosyl, Docosyl, Tetracosyl und Pentacosyl;

als $C_4$- bis $C_{20}$-Alkylphenyl: 4-Butylphenyl, 4-Pentylphenyl, 4-Hexylphenyl, 4-Octylphenyl, 4-(1',1',3',3'-Tetramethylbutyl)-phenyl, 4-Nonylphenyl, 4-Decylphenyl, 4-Undecylphenyl, 4-Dodecylphenyl, 4-Tridecylphenyl, 4-Tetradecylphenyl, 4-Hexadecylphenyl, 4-Octaphenyldecyl und 4-Eicosylphenyl; und

als $C_4$- bis $C_{20}$-Alkoxyphenyl; 4-Butoxyphenyl, 4-Pentoxyphenyl, 4-Hexoxyphenyl, 4-Octoxyphenyl, 4-(2'-Ethylhexoxy)-phenyl, 4-Nonoxyphenyl, 4-Decoxyphenyl, 4-Undecoxyphenyl, 4-Dodecoxyphenyl, 4-Tridecoxyphenyl, 4-Tetradecoxyphenyl, 4-Pentadecoxyphenyl, 4-Hexadecoxyphenyl, 4-Heptadecoxyphenyl, 4-Octadecoxyphenyl, 4-Nonodecoxyphenyl und 4-Eicosyloxyphenyl.

Für V sind $C_4$- bis $C_{25}$-Alkylen besonders bevorzugt und im einzelnen als bevorzugte zu nennen: Butylen-1,4 und -1,3, Pentylen-1,5, Hexylen-1,6, Octylen-1,8, Undecylen-1,11, Decylen-1,10, Dodecylen-1,12, Tetradecylen-1,14, Hexadecylen-1,16, Octadecylen-1,18, $-(CH_2)_{20}$, $-(CH_2)_{21}$, $-(CH_2)_{22}$, $-(CH_2)_{24}$ und $-(CH_2)_{25}$.

Für A ist $C_4$- bis $C_{12}$-Alkyl bevorzugt.

Y steht worzugsweise für $-\overset{\overset{CH_3}{|}}{C}H-$ oder $-(CH_2)_n$ mit n = 0, 1 oder 2.

Als Z sind

$$-O-,\ -S-,\ -SO_2-,\ -O\overset{O}{C}-,\ -\overset{O}{C}-O-,\ -\overset{H}{N}-\overset{O}{C}-,\ \text{und}\ -\overset{O}{C}-NH-,$$

besonders bevorzugt.

An die Polymerkette ist die diskotische Gruppe über einen Spacer, vorzugswiese über die für Z als besonders bevorzugt genannten Gruppen, oder auch über -Y-Z- gebunden, wobei Y für $-(CH_2)_n$ mit n = 1 oder 2 steht.

Von den diskotischen Gruppen sind solche der Formeln (I), (II) und (IV) bevorzugt. In diesen Formeln ist R vorzugsweise ein Rest der Formeln

-Y'-Z'-V-Z'- (VIa), bzw.

-Y'-Z'-A (VI),

in denen

Y' für eine chemische Bindung, $-\overset{\overset{CH_3}{|}}{C}H-$ oder $-CH_2-$ und

Z' für eine chemische Bindung oder für

$$-O-,\ -S-,\ -SO_2-,\ -NH-,\ -O\overset{O}{C}-,\ -\overset{O}{C}-NH-\ \text{oder}\ -NH-\overset{O}{C}-NH-$$

und A und V die oben angegebene Bedeutung haben. Vorzugsweise steht A für $C_4$- bis $C_{12}$-Alkyl und V für $C_4$- bis $C_{25}$-Alkylen.

Bei den diskotischen Gruppen der Formel (I) ist Y' vorzugsweise $-CH_2-$,

$-\overset{\overset{CH_3}{|}}{C}H-$ oder eine chemische Bindung und Z' eine chemische Bindung oder -O-,

$$-S-,\ -NH-,\ -SO_2-,\ -O-\overset{O}{C}-,\ -O-\overset{O}{C}-NH-\ \text{oder}\ -NH-\overset{O}{C}-NH-.$$

Bei den diskotischen Gruppen (II) ist Y' vorzugsweise eine chemische Bindung und Z' eine chemische Bindung oder

$$-O-,\ -S-,\ -O-\overset{O}{C}-,\ -\overset{O}{C}-O-\ \text{oder}$$

O
-C-NH-.

A bzw. V haben die angegebene Bedeutung.

Die Polymere, die diskotische Phasen erzeugende Gruppen chemisch gebunden enthalten, können nach an sich bekannten und in der Polymerchemie üblichen Verfahren hergestellt werden. Dabei ist zwischen den Polymeren zu unterscheiden, in denen die diskotische Phasen liefernde Gruppe als Kettenglied in der Kette gebunden ist und solchen, in denen die diskotische Gruppe als Seitenkette oder an eine Seitenkette gebunden ist.

Polymere, in denen die diskotischen Gruppen als Kettenglieder in der Polymerkette gebunden sind, können z. B. durch Polykondensation von Verbindungen die zwei endständige Carboxylgruppen oder deren funktionelle Derivate im Molekül enthalten, mit Komponenten, die zwei endständige mit der Carboxylgruppe oder deren funktionelle Derivate reagierende reaktionsfähige Gruppen wie Hydroxyl, Amino oder Mercapto im Molekül enthalten, hergestellt werden. Die diskotischen Gruppen können hierbei sowohl Carboxylgruppen bzw. funktionelle Derivate der Carboxylgruppen als auch mit den Carboxylgruppen reagierenden Gruppen tragen. Als Polymere sind Polyester und Polyamide, insbesondere Polyester bevorzugt.

Ein weiteres Verfahren zur Herstellung von Polymeren, in denen die mesogenen Gruppen Glieder der Polymerkette sind, besteht in der Polyaddition von Diisocyanaten mit endständigen Isocyanatgruppen mit Verbindungen, die mit Isocyanat reagierende Substituenten tragen. Auch in diesem Fall kann die diskotische Phasen liefernde Verbindung sowohl die Isocyanatreste als auch die mit dem Isocyanat reagierenden Reste tragen.

Als mit dem Isocyanat reagierende Reste kommen vorzugsweise -SH und $-NH_2$ und insbesondere -OH in Betracht.

Die Umsetzung erfolgt in an sich bekannter Weise unter üblichen Bedingungen. Die Reaktionstemperaturen liegen bei 50°C. Als Lösungsmittel sind Ketone wie Methylethylketon oder Aceton oder Ether wie Tetrahydrofuran geeignet. Übliche Katalysatoren sind z. B. Dibutylzinnlaurat und 1,4-Diazabicyclo-[2,2,2]octan. Diese werden im allgemeinen in Konzentrationen von 0,1 bis 1 Gew.%, bezogen auf die gesamte Mischung, angewendet.

Polymere, die Mesogene in der Seitenkette oder als Seitenkette enthalten, können z. B. durch polymeranaloge Reaktionen hergestellt werden. Dabei sollte der Abstand von der Hauptkette zum Mesogen mindestens 4 Kettenglieder betragen.

So können z. B. in polymere Verbindungen, welche in der Kette Glieder der Formel (VII) enthalten,

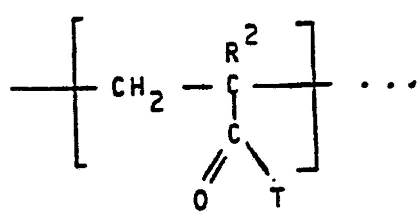 (VII),

worin T ein austauschbarer Rest wie Hydroxy, Chlor, niedermolekulares Alkoxy und $R^2$ Wasserstoff, Methyl, Chlor oder Brom sind, durch Veresterung, Umesterung oder Acylierung Mesogene mit einer an einem R endständigen Hydroxyl-, Mercapto- oder Aminogruppe eingeführt werden.

Die Methoden sind an sich bekannt (C.M. Paleos et al.; J. Polym. Sci. Polym. Chem. Ed., 19, 1427 (1981)).

Der Austausch von T kann auch mit einer reaktionsfähigen Gruppe eines an eine diskotische Gruppe gebundenen Spacers erfolgen.

Bei diskotischen Gruppen, welche eine endständige Carboxylgruppe oder deren funktionelle Derivate tragen, muß das Polymere Amino-, Mercapto- oder Hydroxylgruppen enthalten. Solche Polymere können z. B. durch Copolymerisation von (Meth)Acrylsäurehalbestern von 1, -Diolen mit weiteren Comonomeren erhalten werden.

Die polymeranaloge Umsetzung erfolgt dann in an sich bekannter Weise.

Eine weitere Möglichkeit, diskotische Gruppen an die Polymerkette zu binden, besteht in der Umsetzung von einen Isocyanatrest tragenden diskotischen Gruppen mit Polymeren, die mit Isocyanat reagierende Substituenten aufweisen, z. B. vorstehend genannte Hydroxylgruppen tragende Copolymere.

Der Isocyanatrest kann in die diskotische Gruppe z. B. durch Umsetzen einer diskotische Phasen erzeugenden Verbindung, die an einem R einen mit Isocyanat reagierenden Substituenten, wie -OH, -SH oder $-NH_2$ trägt, mit einem Diisocyanat im Molverhältnis 1 : 1 eingeführt werden.

Die Umsetzung der einen Isocyanatrest tragenden diskotischen Gruppe mit dem reaktionsfähige Substituenten tragenden Polymeren erfolgt nach an sich bekannten Verfahren.

Umgekehrt ist es auch möglich, Isocyanatreste in Polymere einzuführen und die Isocyanatreste mit diskotischen Gruppen umzusetzen, die an einem R einen endständigen mit Isocyanat reagierenden Substituenten tragen.

Weiterhin können flüssig-kristalline Phasen bildende Polymere durch Kondensation von diskotischen

Gruppen, die an zwei Spacern Hydroxyl-, Amino-, Thio- oder Carboxylgruppen tragen, mit bifunktionellen Verbindungen, die mit den an den Spacern stehenden Gruppen unter Bildung einer chemischen Bindung zu Polymeren reagieren, hergestellt werden, z. B. durch Polykondensation von diskotischen Gruppen, die zwei Reste -Y-Z-V-Z-H tragen und ZH für z. B. -OH, $-NH_2$ oder -SH steht, mit 1,10-Alkandicarbonsäuren mit 6 bis 20 C-Atomen, z. B. Adipinsäure, Hexandicarbonsäure-1,6, Octandicarbonsäure-1,8, Decandicarbonsäure-1,10 im Verhältnis von 0,9 : 1 bis 1 : 0,9, vorzugsweise 1 : 1 Mol.

Polymere, die in der Seitenkette oder an die Seitenkette gebundene Mesogene tragen, können außerdem durch Polymerisation von ethylenisch ungesättigten Verbindungen der Formel

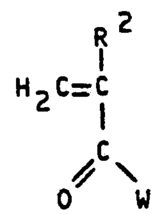

(VIII)

gegebenenfalls mit weiteren olefinisch ungesättigten Verbindungen, die mit (VIII) copolymerisierbar sind, hergestellt werden. Dem entsprechend bestehen die so hergestellten Polymere aus Einheiten der Formel

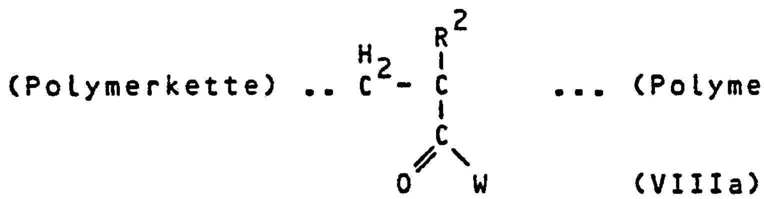

(VIIIa)

oder enthalten Einheiten der Formel (VIIIa) in der Kette.

In den Formeln (VIII) und (VIIIa) steht W fur eine über -Y' -Z' -V-Z' an das C-Atom des Carbonylrestes gebundene diskotische Gruppe der Formeln (I), (II), (III) oder (IV) worin Y' eine chemische Bindung, Z' -O-, -S-

oder $-\underset{R^1}{N}-$

bedeutet und V die oben angegebene Bedeutung hat.

Als Comonomere für die Copolymerisation von (VIII) bzw. als Comonomere für die Herstellung der für die polymeranalogen Umsetzungen benötigten Polymere kommen solche Monomere in Betracht, die Homo- oder Copolymere mit Glastemperaturen von $\leqslant$ 100°C liefern.

Der Polymerisationsgrad liegt in der Regel zwischen 5 und 500, vorzugsweise bei $\geqslant$10 und 100.

Als Comonomere kommen vor allem in Betracht:

$C_1$- bis $C_{20}$-, vorzugsweise $C_4$- bis $C_8$-Alkylester der Acrylsäure und/oder der Methacrylsäure, Gemische dieser Ester sowie Gemische der genannten Ester mit Acrylnitril, Methacrylnitril, Styrol, 4-Methylstyrol, Acrylamid und/oder Methacrylamid.

Als Comonomere kommen neben den vorstehend bestimmt genannten im einzelnen z. B. in Betracht:

Methylacrylat, Ethylacrylat, Propylacrylat, n-Butylacrylat, Isobutylacrylat, Hexylacrylat, n-Octylacrylat, 2-Ethylhexylacrylat, Nonylacrylat, Decylacrylat, Dodecylacrylat, Hexadecylacrylat, Octadecylacrylat sowie die entsprechenden Methacrylate.

Bevorzugt sind die genannten Acrylate und Methacrylate von Alkanolen mit 4 bis 8 C-Atomen.

Die Herstellung der Polymere erfolgt nach bekannten Verfahren, vorzugsweise durch radikalische Polymerisation.

Polymere, die diskotische Gruppen als Seitenketten oder an Seitenketten gebunden enthalten, können außerdem durch Addition von polarisierbaren, reaktionsfähigen Wasserstoff tragenden Resten an olefinische Doppelbindungen erhalten werden.

So könmen z. B. Poly-Organo-Wasserstoff-Siloxane mit eine endständigen Vinylgruppe enthaltenden Mesogenen gegebenenfalls in Lösungsmitteln in Anwesenheit von Katalysatoren, insbesondere Hexachloroplatinsäure, die die Anlagerung von an Si gebundenem Wasserstoff an aliphatische Mehrfachbindungen beschleunigen, umgesetzt werden.

Diese Umsetzungen erfolgen in an sich bekannter Weise (H. Ringsdorf, A. Schneller; Brit. Polym. Journal 13, 43 (1981); H. Ringsdorf, A. Schneller Makromol. Chem., Rapid Comm. Vol. 3, 557 (1982)).

Die erfindungsgemäßen Polymere, die als mesogene Gruppen diskotische Phasen bildende Gruppen chemisch gebunden enthalten, können in sehr verschiedener Weise angewendet werden. Die Anwendung

ergibt sich zum einen aus den flüssig-kristallinen Eigenschaften und zum anderen aus den spezifischen Eigenschaften der Polymere. Durch die im Gegensatz zu organischen Materialien ungewöhnlich hohen Anisotropie der Brechungsindizes ergeben sich Anwendungsmöglichkeiten als optisches Beschichtungsmaterial und als optisch Material für Bauelemente in integrierter Optik. Dadurch, daß die erfindungsgemäßen Polymere oberhalb der Glastemperatur als viskose Flüssigkeit verarbeitet und die Lage der optischen Achse durch elektrische oder magnetische Felder festgelegt werden kann, und dadurch, daß die Formen und Struktur der Orientierung, die als Informationsträger ausgebildet sein kann, durch Abkühlung auf Temperaturen unterhalb der Glastemperatur fixiert werden können, ist ihre Anwendung in oder als Speicherelemente oder in elektrooptischen Anzeigeelementen möglich.

Andererseits kann man die durch Scherung verändernde Lichtdurchlässigkeit z. B. zur optischen Messung von Dehnungsvorgängen im Maschinenbau, in der Baustatik und im Bergwesen nutzen (Dehnungssensoren).

Vorzugsweise werden in oder als optische Speicherelemente oder elektrooptischen Anzeigen farbige diskotische Polymere verwendet. Letztere werden durch Zugeben von pleochroitischen Farbstoffen, die sich in den diskotischen Polymeren lösen und die sich an den mesogenen Gruppen orientieren, oder durch den Einbau pleochroitischer Farbstoffe in die Hauptkette oder in die Seitenkette der erfindungsgemäßen Polymeren erhalten (DE-A-32 11 400).

Durch Einbau von mesogenen Resten mit Elektronendonor- oder Elektronenacceptoreigenschaften in Polymere, die mesogene diskotische Phasen bildende Gruppen chemisch gebunden enthalten, können elektrisch leitende bzw. photoleitende diskotische Polymere hergestellt werden.

Die erfindungsgemäßen Polymere und deren Herstellung sollen durch die folgenden Beispiele zusätzlich erläutert werden.

**Beispiel 1**

7 mg eines Methyl-Wasserstoff-Polysiloxans der Formel

$$(H_3C)_3Si-O-\left[\begin{array}{c} CH_3 \\ -Si-O- \\ H \end{array}\right]_n-Si(CH_3)_3 \qquad (IX)$$

$$\bar{n} = 35$$

und 99 mg 2-Undecenoxy-3,6,7,10,11-penta-n-pentoxy-triphenylen, hergestellt nach Beispiel A.2) wurden in 2 ml Toluol gelöst und 100 ppm Hexachloroplatinsäure, bezogen auf die Lösung, zugegeben. Das Gemisch wurde 2 Tage bei 80° C gehalten.

Das Organopolysiloxan wurde durch präparative Gelpermeationschromatographie in Tetrahydrofuran gereinigt und in Vakuum getrocknet. Das Polymere enthält im Mittel an der Polymerkette 35 Gruppen der Verbindung (A.2). Das Polymere hatte eine Glastemperatur von ca. -29°C. Die Umwandlungstemperatur diskotisch/isotrop liegt bei +39° C, die Umwandlungswärme wurde zu 13 J/g bestimmt.

**Beispiel 2**

Entsprechend den Angaben des Beispiels 1 wurden 17 mg eines Copolysiloxans der Formel

$$(H_3C)_3Si-O-\cdots\left[\begin{array}{c} CH_3 \\ -Si-O- \\ CH_3 \end{array}\right]_n\cdots\left[\begin{array}{c} CH_3 \\ Si-O \\ H \end{array}\right]_n\cdots-Si(CH_3)_3. \qquad (X),$$

in dem die $Si(CH_3)_2O$- und $SiHCH_3O$-Gruppen statistisch verteilt sind und n im Mittel 35 ist, mit 126 mg 2-Undecenoxy-3,6,7,10,11-penta-n-pentoxy-tri-phenylen, hergestellt nach Beispiel A.2), umgesetzt. Das erhaltene Polymere enthält im Mittel 35 Gruppen der Verbindung A.2) an der Polymerkette gebunden.

Das erhaltene Polymer wies eine diskotische Phase auf, die bei 36°C in die isotrope Phase überging. Die Umwandlungsenthalpie wird zu 11,7 J/g bestimmt. Die Glastemperatur lag bei -29° C.

**Beispiel A**

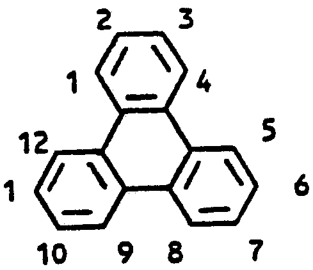

(XI)

A. 1) 2-Monoacetoxy-3,6,7,10,11-penta-n-pentoxytriphenylen

4 g (6,9 mmol) 2,3,6,7,10,11-Hexyacetoxy-triphenylen XI (hergestellt nach O.C. Musgrave, C.J. Webster; J. Chem. Soc. C: 1971, S. 1397), 8,1 g (58,5 mmol) wasserfreies, feingepulvertes Kaliumcarbonat und 21,2 g (140 mmol) n-Pentylbromid wurden in 80 ml Acetophenon unter einer Stickstoffatmosphäre 16,5 h bei 116°C gerührt. Das abgekühlte Reaktionsgemisch wurde durch eine G 3-Fritte abgesaugt und der Filterrückstand mehrere Male mit insgesamt 250 ml Ether warm extrahiert, bis eine Probe des Rückstands in Wasser vollständig löslich ist. Das Filtrat und der Etherextrakt wurden vereinigt und dreimal mit je 100 ml mit $CO_2$-gesättigtem Wasser gewaschen. Nach dem Trocknen über wasserfreiem Natriumsulfat wurde der Ether abdestilliert und im Ölpumpenvakuum Acetophenon und überschüssiges Pentylbromid bei Temperaturen unterhalb 50°C abdestilliert.

Der langsam kristallisierende Rückstand wurde in 20 ml Acetanhydrid aufgenommen, um evtl. vorliegende freie OH-Gruppen zu acetylieren. Der Überschuß an Acetanhydrid wurde im Vakuum entfermt. Rückstand: 5 g Rohprodukt, das 2,3,6,7,10,11-Hexapentoxytriphenylen, 2-Monoacetoxy-3,6,7,10,11-pentapentoxytriphenylen und Diacetoxy-tetrapentoxytriphenylen enthält.

Das Rohprodukt wurde durch Säulenchromatographie über Kieselgel (500 g) mit Methylenchlorid/Petrolether = 3 : 2 Volumen in Fraktionen getrennt, von denen die mittleren die gewünschte 2-Acetoxy-3,6,7,10,11-pentapentoxy-Verbindung enthalten.

Die letzten Fraktionen enthalten die Diacetoxyverbindungen.

Die aus den eingeengten Fraktionen erhaltenen Produkte wurden durch Umkristallisation aus Ethanol/Diethylether bzw. Methanol weiter gereinigt.

Das 2-Monoacetoxy-3,6,7,10,11-penta-n-pentoxytriphenylen weist einen Klärpunkt von 161°C auf. Es kristallisiert nicht oberhalb -50°C.

A. 2) 2-(Undecen-10'-oxy)-3,6,7,10,11-penta-n-pentoxytriphenylen

2-Acetoxy-3,6,7,10,11-penta-n-pentoxytriphenylen aus A.1 wird in Gegenwart von wasserfreiem feingepulvertem $K_2CO_3$ mit 1-Brom-undecylen-10 in Acetophenon 7 Tage bei Raumtemperatur umgesetzt.

Die Aufarbeitung und Reinigung erfolgte analog den Angaben unter A.1).

A. 3) 2,6-Diacetoxy-3,7,10,11-tetra-n-pentoxytriphenylen

wurde aus den ersten Diacetoxy-tetrapentoxytriphenylen enthaltenden Fraktionen von A.1) in reiner Form isoliert. Nach dem Eindampfen der Fraktionen wurde der Rückstand aus Methanol umkristallisiert.

**Beispiel 3**

Discotischer Polyester durch Polykondensation in der Schmelze

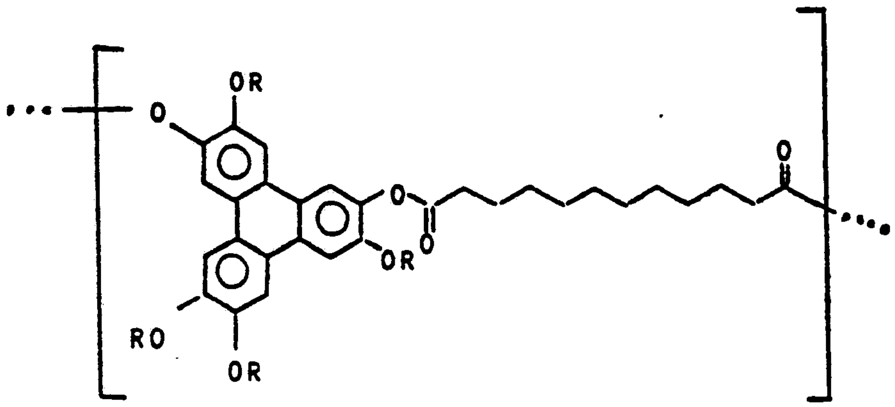

(XII)

R = $-(CH_2)-_4CH_3$

599,7 mg (= 0,87 mmol) 2,6-Diacetoxy-3,7,10,11-tetra-n-pentoxy-triphenylen (das aus Methanol umkristallisiert wurde), wird mit 200,3 mg (= 0,87 mmol) Decan-1,10-dicarbonsäure (umkristallisiert aus 20 %-igem Ethanol und dann umkristallisiert aus Ethanol: Hexan = 1 : 1 Vol.) gemischt. Als Katalysator werden 1,5 mg (= 1 Mol.-%) p-Toluolsulfonsäure zugesetzt. Unter Schutzgasatmosphäre wird das Gemisch auf 130°C erwärmt, wobei eine Schmelze entsteht. Diese Temperatur wird 2 Stunden gehalten. Anschließend wird 1 Stunde bei 200 mbar Essigsäure abdestilliert und der Druck nach Maßgabe der Gasblasenentwicklung bis auf ~ 20 mbar verringert. Dauer 2 h.

Anschließend wird im Vakuum einer Ölpumpe (Druck: 0,5 bis 0,05 mbar) erwärmt, wobei die Temperatur 10°C-weise erhöht werden mußte, um jeweils eine isotrope (klare) Schmelze zu erhalten. Zuletzt wird die Schmelze 3 h lang bei einem Druck von < 0,01 mbar bei T = 185°C gehalten. Nach dem Abkühlen wird der erhaltene Schmelzkuchen in 7 ml THF gelöst und in 120 ml n-Hexan vorsichtig ausgefällt. Die Fällung wird abzentrifugiert, mit Hexan digeriert und zentrifugiert, nochmals in 5 ml THF aufgenommen und erneut in 70 ml Hexan ausgefällt. Das getrocknete Polymere enthält keine Reste an Ausgangssubstanz mehr (Dünnschichtchromatographie in $CH_2Cl_2$: Rf = 0).

Ausbeute: 410 mg = 59 % d.Th.

Phasen laut DSC und Polarisationsmikroskopie:

g 40°C D 194°C i

D = diskostische columnare Phase

i = isotrope Phase.

Enthalpie bein Übergang D nach i: 15 J/g.

**Beispiel 4**

20 mg des nach Beispiel 1 erhaltenen Polymeren werden in 1 ml Methylenchlorid gelöst und mit 1 mg Tetradecyloxykupferphthalocyanin der Formel (XIII)

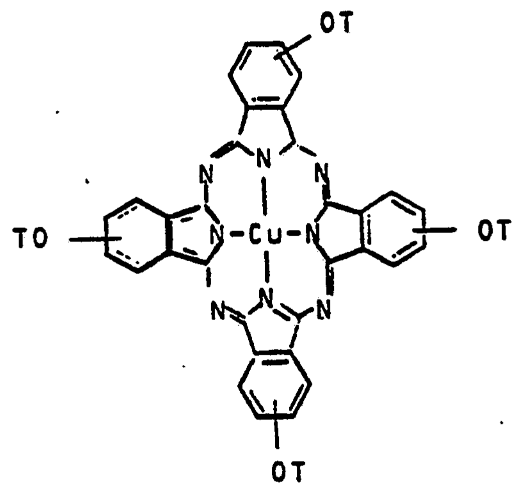

(XIII)

(T = $-C_{10}H_{21}$) in Form einer 5 %-igen Lösung in Tetrahydrofuran versetzt. Die Lösungsmittel läßt man bei Raumtemperatur abdünsten und hält dann 12 h bei Raumtemperatur bei einem Druck von 1 mbar. An dem gefärbten Polymeren ist keine Veränderung des Mesophasenverhaltens zu beobachten.

**Beispiel 5**

Es wird wie in Beispiel 4 verfahren, jedoch wird die Verbindung XIII mit T = $C_{12}H_{25}$ verwendet.

Man erhält ein blau gefärbtes Polymere, das in seinem Phasenverhalten dem Polymeren des Beispiel 1 entspricht.

**Patentansprüche**

1. Flüssig-kristalline Phasen bildende Polymere, die als mesogene Gruppen diskotische Phasen erzeugende Gruppen chemisch gebunden enthalten.

2. Flüssig-kristalline Phasen bildende Polymere gemäß Anspruch 1,
dadurch gekennzeichnet, daß die diskotische Phasen erzeugende Gruppe in der Polymerkette über zwei Gruppen der Formel -Y-Z-V-Z- gebunden

ist, wobei in der Formel Y für $(-CH_2-)_n$ oder

$$-\overset{CH_3}{\overset{|}{C}H}- ,$$

worin
n 0, 1 oder 2 ist,
Z für eine chemische Bindung, für

$$-O-,\ -S-,\ -\underset{R^1}{\underset{|}{N}}-,\ -SO_2-,\ -\overset{O}{\overset{\|}{C}}-,\ -O-\overset{O}{\overset{\|}{C}}-,\ -\overset{O}{\overset{\|}{C}}-O-,\ -S-\overset{O}{\overset{\|}{C}}-,\ -\overset{O}{\overset{\|}{C}}-S-,\ -\overset{R^1}{N}-\overset{O}{\overset{\|}{C}}-,\ -\overset{O}{\overset{\|}{C}}-\overset{R^1}{N}-,$$

worin $R^1$ Wasserstoff
oder $C_1$-$C_4$-Alkyl ist und Z gleich oder verschieden sein können,
V für $C_2$- bis $C_{25}$, vorzugsweise $C_4$- bis $C_{25}$-Alkylen und worin die Alkylkette gegebenenfalls durch -O-, -S- oder

$$-\overset{R^1}{N}-$$

unterbrochen sein kann und der Abstand zwischen zwei Heteroatomen mindestens 2 C-Atome beträgt.

3. Flüssig-kristalline Phasen bildende Polymere gemäß Anspruch 1,
dadurch gekennzeichnet, daß die diskotische Phasen erzeugende Gruppe über eine Gruppe der Formel -Y-Z-V-Z- an die Polymerkette gebunden ist,
wobei in der Formel Y für $-(CH_2)-_n$ oder

$$-\overset{CH_3}{\overset{|}{C}H}- ,$$

worin
n 0, 1 oder 2 ist,
Z für eine chemische Bindung, für -O-, -S-,

$$-\underset{R^1}{\underset{|}{N}}-,\ -SO_2-,\ -\overset{O}{\overset{\|}{C}}-,\ -O-\overset{O}{\overset{\|}{C}}-,\ -\overset{O}{\overset{\|}{C}}-O-,\ -S-\overset{O}{\overset{\|}{C}}-,\ -\overset{O}{\overset{\|}{C}}-S-,\ -\overset{R^1}{N}-\overset{O}{\overset{\|}{C}}-,\ -\overset{O}{\overset{\|}{C}}-\overset{R^1}{N}-,$$

worin $R^1$ Wasserstoff oder $C_1$-$C_4$-Alkyl ist und Z gleich oder verschieden sein können,
V für $C_2$- bis $C_{25}$, vorzugsweise $C_4$- bis $C_{25}$-Alkylen und worin die Alkylkette gegebenenfalls durch -O-, -S- oder

$$-\overset{R^1}{N}-$$

unterbrochen sein kann und der Abstand zwischen zwei Heteroatomen mindestens 2 C-Atome beträgt.

4. Polymere gemäß Anspruch 1, 2, oder 3,
dadurch gekennzeichnet, daß diese pleochroitische Farbstoffe enthalten.

5. Flüssig-kristalline Phasen bildende Polymere gemäß den Ansprüchen 1, 2, 3 oder 4,
dadurch gekennzeichnet, daß diese als diskotische Phasen bildende Gruppen Reste der Formel

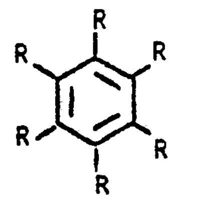 , 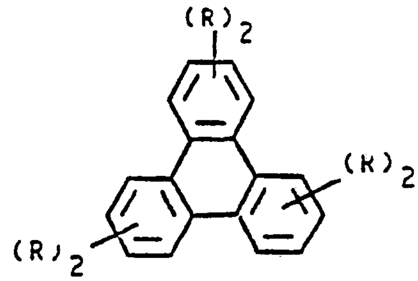 ,

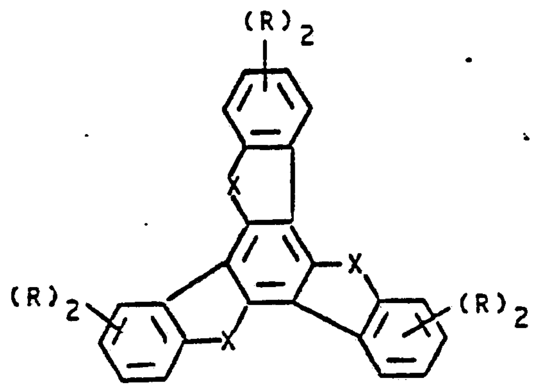 oder 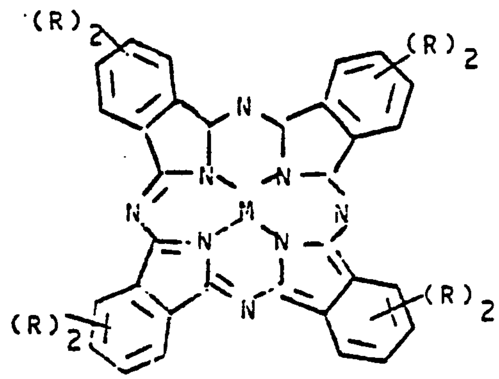

enthalten, worin

X für -O-, -S-, $\underset{R^1}{-N-}$, >$CH_2$ oder >CO,

$R^1$ für Wasserstoff oder $C_1$- bis $C_4$-Alkyl,

M für Cu oder Ni

ein oder zwei R jeweils für einen Rest der Formel -Y-Z-V-Z- und die restlichen R jeweils für einen Rest der Formel -Y-Z-A stehen,

worin Y $(-CH_2-)_n$ oder $\overset{CH_3}{-CH}$ ;

n 0, 1 oder 2,

Z eine chemische Bindung, -O-, -S-,

$$\overset{R^1}{-N-},\ -SO_2-,\ \overset{O}{-C-},\ -O\overset{O}{C}-,\ \overset{O}{-C}-O-,\ -S-\overset{O}{C}-,\ \overset{O}{-C}-S-,\ \overset{R^1}{-N}-\overset{O}{C}-,\ \overset{O}{-C}-\overset{R^1}{N}-,$$

wobei Z gleich oder verschieden sein kann,

A $C_4$- bis $C_{25}$-Alkyl, $C_4$- bis $C_{20}$-Alkylphenyl oder $C_4$- bis $C_{20}$-Alkoxyphenyl und

V $C_2$- bis $C_{25}$, vorzugsweise $C_4$- bis $C_{25}$-Alkylen, wobei die Alkylenkette gegebenenfalls durch -O-, -S- oder $\underset{R^1}{-N-}$ unterbrochen ist.

6. Flüssig-kristalline Phasen bildende Polymere gemäß Anspruch 1, 2, 3 oder 4, dadurch gekennzeichnet, daß diese als diskotische Phasen bildende Gruppen Reste der Formel

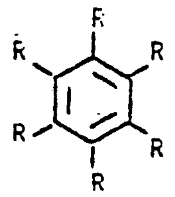

oder

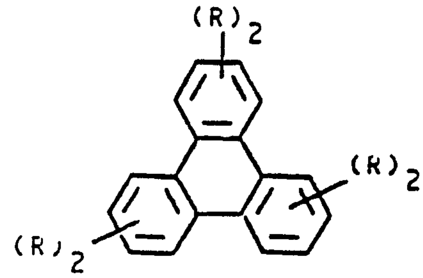

enthalten, worin die R die in Anspruch 5 angegebenen Bedeutungen haben.

7. Flüssig-kristalline Phasen bildende Polymere gemäß Ansprüchen 2, 3, 4, 5 oder 6 dadurch gekennzeichnet, daß Y für eine chemische Bindung und Z für eine chemische Bindung, für -S-,

$$-O\overset{O}{C}-,\ -\overset{O}{C}-O-\ \text{oder}\ -\overset{O}{C}-NH-$$

stehen.

8. Verwendung der Polymere gemäß den Ansprüchen 1 bis 7 in elektrooptischen Anzeigen, Speicherelementen, als elektrisch oder photoelektrisch leitende Polymere oder als Dehnungssensoren.

**Claims**

1. A polymer which forms a liquid-crystalline phase and which contains, as mesogenic groups, chemically bonded groups which produce a discotic phase.

2. A polymer which forms a liquid-crystalline phase, as claimed in claim 1, wherein the group which produces a discotic phase is bonded in the polymer chain via two groups of the formula -Y-Z-V-Z-, where Y is $(-CH_2-)_n$ or

$$-\overset{CH_3}{\overset{|}{C}}H-,$$

wherein n is 0, 1 or 2, the radicals Z can be identical or different and are each a chemical bond, -O-, -S-,

$$-\underset{R^1}{N}-,\ SO_2-,\ -\overset{O}{C}-,\ -O-\overset{O}{C}-,\ -\overset{O}{C}-O-,\ -S-\overset{O}{C}-,\ -\overset{O}{C}-S-,\ -\overset{R^1}{N}-\overset{O}{C}-\ \text{or}\ -\overset{O}{C}-\overset{R^1}{N}-,$$

wherein $R^1$ is hydrogen or $C_1$-$C_4$-alkyl, and V is $C_2$-$C_{25}$-alkylene, preferably $C_4$-$C_{25}$-alkylene, and the alkyl chain may or may not be interrupted by -O-, -S- or

$$\overset{R^1}{-N}$$

and two hetero atoms are separated by 2 or more carbon atoms.

3. A polymer which forms a liquid-crystalline phase, as claimed in claim 1, wherein the group which produces a discotic phase is bonded to the polymer chain via a group of the formula -Y-Z-V-Z- where Y is $-(CH_2)-_n$ or

$$-\overset{CH_3}{\overset{|}{C}}H-,$$

wherein n is 0, 1 or 2, the radicals Z can be identical or different and are each a chemical bond, -O-, -S-,

$$-\underset{R^1}{N}-,\ -SO_2,-\overset{O}{C}-,-O-\overset{O}{C}-,\ -\overset{O}{C}-O-,\ -S-\overset{O}{C}-,\ -\overset{O}{C}-S-,\ -\overset{R^1}{N}-\overset{O}{C}-\ \text{or}\ -\overset{O}{C}-\overset{R^1}{N}-,$$

wherein $R^1$ is hydrogen or $C_1$-$C_4$-alkyl, and V is $C_2$-$C_{25}$-alkylene, preferably $C_4$-$C_{25}$ alkylene, and the alkyl chain may or may not be interrupted by -O-, -S- or

$R^1$
-N-, and two hetero atoms are separated by 2 or more carbon atoms.

4. A polymer as claimed in claim 1 or 2 or 3 which contains a pleochroic dye.

5. A polymer which forms a liquid-crystalline phase, as claimed in claim 1 or 2 or 3 or 4 which contains as a group which forms a discotic phase a radical of the formula

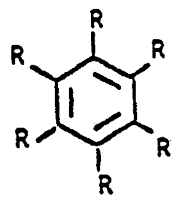,

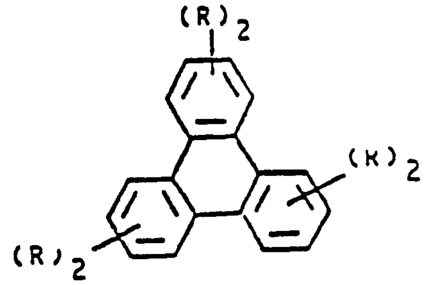,

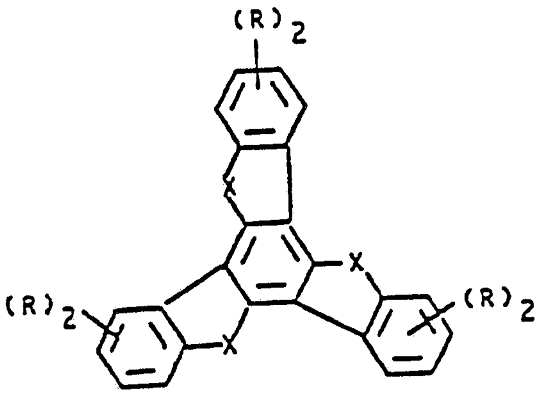

or

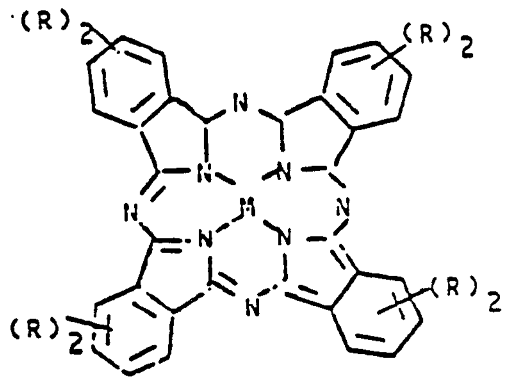

where X is -O-, -S-, $-\overset{|}{\underset{R^1}{N}}-$, $>CH_2$ or $>CO$, $R^1$ is hydrogen or $C_1$-$C_4$-alkyl, M is Cu or Ni, and one radical R is a radical of the formula -Y-Z-V-Z-, or two of the radicals R are each such a radical, and the remaining radicals R are each a radical of the formula -Y-Z-A, where Y is $-(CH_2)-_n$ or $-\overset{CH_3}{\overset{|}{C}H}-$, n is 0, 1 or 2, the radicals Z can be identical or different and are each a chemical bond -O-, -S-, $-\overset{R^1}{N}-$, $-SO_2-$, $-\overset{O}{C}-$, $-O\overset{O}{C}-$, $-\overset{O}{C}-O-$, $-S-\overset{O}{C}-$, $-\overset{O}{C}-S-$, $-\overset{R^1}{N}-\overset{O}{C}-$ or $-\overset{O}{C}-\overset{R^1}{N}-$, A is $C_4$-$C_{25}$-alkyl, $C_4$-$C_{20}$-alkylphenyl or $C_4$-$C_{20}$-alkoxyphenyl and V is $C_2$-$C_{25}$-alkylene, preferably $C_4$-$C_{25}$-alkylene, where the alkylene chain may or may not be interrupted by -O-, -S-or $-\underset{R^1}{\underset{|}{N}}-$.

6. A polymer which forms a liquid-crystalline phase, as claimed in claim 1 or 2 or 3 or 4, which contains as a group which forms a discotic phase a radical of the formula

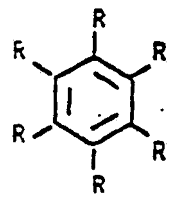

or

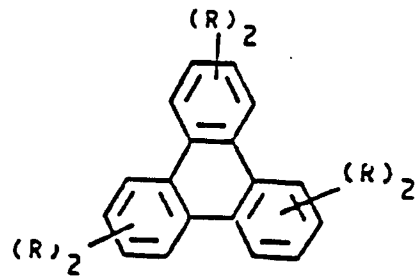

7. A polymer which forms a liquid-crystalline phase, as claimed in claim 2 or 3 or 4 or 5 or 6, wherein Y is a chemical bond, and Z is a chemical bond,

$$-S-,\ -O\overset{O}{C}-,\ -\overset{O}{C}O-\ \text{or}\ -\overset{O}{C}-NH-.$$

8. Use of a polymer as claimed in any of claims 1 to 7 in an electro-optical display, in a storage element, as an electrically or photoelectrically conductive polymer and as a strain sensor.

**Revendications**

1. Polymères générateurs de phases cristallines liquides, qui contiennent, liés chimiquement, comme groupes mesogènes, des groupes produisant des phases discotiques.

2. Polymères générateurs de phases cristallines liquides, selon la revendication 1, caractérisés par le fait que le groupe produisant des phases discotiques est lié, dans la chaîne polymère par l'intermédiaire de deux groupes de formule -Y-Z-V-Z-,

formule dans laquelle Y est mis pour $(-CH_2-)_n$ ou

$$-\overset{CH_3}{\overset{|}{CH}}-,\ \text{où}$$

n est 0,1 ou 2,

Z est mis pour une liaison chimique, pour -O-, -S-,

$$-\underset{R^1}{\underset{|}{N}}-,\ -SO_2-,\ -\overset{O}{C}-,\ -O-\overset{O}{C}-,\ -\overset{O}{C}-O-,\ -S-\overset{O}{C}-,\ -\overset{O}{C}-S-,\ -\overset{R^1}{N}-\overset{O}{C}-,\ -\overset{O}{C}-\overset{R^1}{N}-,$$

où $R^1$ est hydrogène ou alkyle en $C_1$-$C_4$ et les Z peuvent être identiques ou différents,

V est mis pour alkylène en $C_2$-à $C_{25}$, de préférence $C_4$-à $C_{25}$ et où la chaîne alkyle peut être interrompue éventuellement par -O-, -S- ou

$$-\overset{R^1}{N}-$$

et l'intervalle entre deux hétéroatomes est d'au moins 2 atomes C.

3. Polymères générateurs de phases cristallines liquides, selon la revendication 1, caractérisés par le fait que le groupe produisant des phases discotiques est lié, dans la chaîne polymère, par l'intermédiaire d'un groupe de formule -Y-Z-V-Z,

formule dans laquelle Y est mis pour $(-CH_2-)$ ou

$$-\overset{CH_3}{\overset{|}{CH}}-,\ \text{où}$$

n est 0,1 ou 2,

Z est mis pour une liaison chimique pour -O- -S-,

$-\underset{R^1}{N}-$, $-SO_2-$, $-\overset{O}{C}-$, $-O-\overset{O}{C}-$, $-\overset{O}{C}-O-$, $-S-\overset{O}{C}-$, $-\overset{O}{C}-S-$, $-\overset{R^1}{N}-\overset{O}{C}-$, $-\overset{O}{C}-\overset{R^1}{N}-$,

où $R^1$ est hydrogène ou alkyle en $C_1$-$C_4$ et les Z peuvent être identiques ou différents,

V est mis pour alkylène en $C_2$-à $C_{25}$, de préférence $C_4$-à $C_{25}$ et où la chaîne alkyle peut être interrompue éventuellement par -O-, -S- ou

$$-\overset{R^1}{N}-$$

et l'intervalle entre deux hétéroatomes est d'au moins 2 atomes C.

4. Polymères selon la revendication 1, 2 ou 3, caractérisés par le fait ceux-ci contiennent des colorants pleochroïtiques.

5. Polymères générateurs de phases cristallines liquides selon les revendications 1, 2, 3 ou 4 caractérisés par le fait que ceux-ci contiennent, comme groupes produisant des phases discotiques, des restes de formules

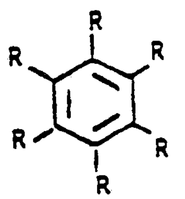
,
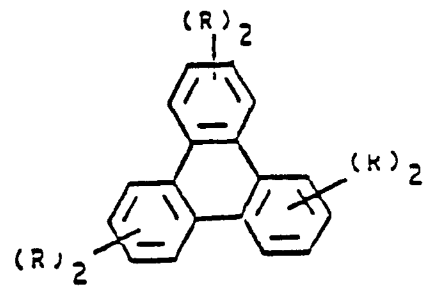
,
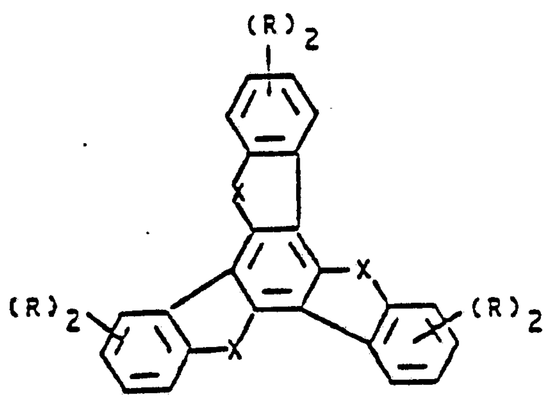
ou
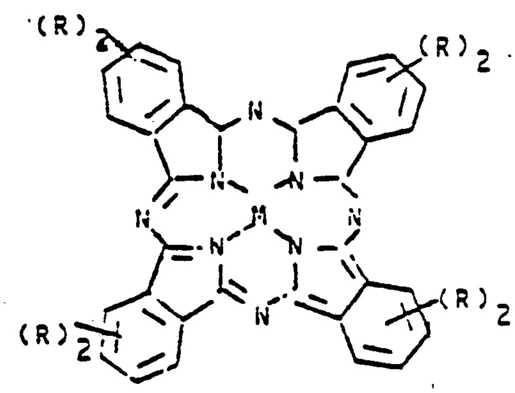

dans lesquelles

X est mis pour -O-, -S-,

$$-\underset{R^1}{N}-\ ,$$

$>CH_2$ ou $>C_o$,

$R^1$ pour hydrogène ou alkyle ou $C_1$ à $C_4$,

M pour Cu ou Ni

un ou deux R sont mis pour un reste de formule -Y-Z-V-Z- et les autres R sont mis chacun pour un reste de formule -Y-Z-A

où Y est mis pour $(-CH_2-)_n$ ou

$$-\overset{CH_3}{\overset{|}{CH}} \; ; \; n$$

pour 0, 1 ou 2,
Z pour une liaison chimique -O-, -S-,

$$-\overset{R^1}{N}-, \quad -SO_2-, \quad -\overset{O}{C}-, \quad -O\overset{O}{C}-, \quad -\overset{O}{C}-O-, \quad -S-\overset{O}{C}-, \quad -\overset{O}{C}-S-, \quad -\overset{R^1}{N}-\overset{O}{C}-, \quad -\overset{O}{C}-\overset{R^1}{N}-,$$

les Z pouvant être identiques ou différents,

A est mis pour alkyle en $C_4$- à $C_{25}$, alkylphényle en $C_4$-$C_{20}$, ou alcoxyphényle en $C_4$- à $C_{20}$ et

V est mis pour alkylène en $C_2$- à $C_{25}$, de préférence en $C_4$-à $C_{25}$, la chaîne alkylène pouvant être interrompue éventuellement par -O-, -S- ou

$$-\underset{R1}{\underset{|}{N}}-$$

6. Polymères générateurs de phases cristallines liquides, selon la revendication 1, 2, 3 ou 4, caractérisés par le fait que ceux-ci contiennent, comme groupes produisant des phases discotiques, des restes de formules

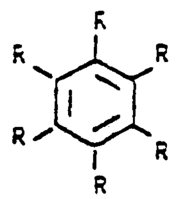

ou

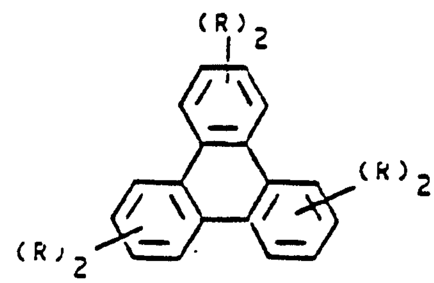

ou les R ont les significations données dans la revendication 5.

7. Polymères générateurs de phases cristallines liquides, selon les revendications 2, 3, 4, 5 ou 6, caractérisés par le fait que Y est mis pour une liaison chimique et Z pour
une liaison chimique, pour -S-,

$$-O\overset{O}{C}-, \quad -\overset{O}{C}-O- \quad \text{ou} \quad -\overset{O}{C}-NH-$$

8. Utilisation des polymères selon les revendications 1 à 7 dans les signalisations optoélectriques, les éléments de mémoire, comme polymères conducteurs électriques ou photoélectriques ou comme jauges d'allongement.